(19) Europäisches Patentamt
European Patent Office
Office européen des brevets

(11) **EP 1 642 869 A1**

(12) **EUROPÄISCHE PATENTANMELDUNG**

(43) Veröffentlichungstag:
05.04.2006 Patentblatt 2006/14

(51) Int Cl.:
$C03C\ 3/062$ (2006.01)   $C03C\ 3/068$ (2006.01)
$C03C\ 3/095$ (2006.01)   $C03C\ 4/12$ (2006.01)
$C03C\ 10/00$ (2006.01)

(21) Anmeldenummer: 05019624.5

(22) Anmeldetag: 09.09.2005

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 29.09.2004 DE 102004048041

(71) Anmelder: **Schott AG**
**55122 Mainz (DE)**

(72) Erfinder:
• **Peuchert, Ulrich**
**55294 Bodenheim (DE)**
• **Zachau, Thilo**
**68642 Bürstadt-Riedrode (DE)**

• **Letz, Martin**
**55128 Mainz (DE)**
• **Hayden, Joseph S.**
**18411 Clarks Summit (US)**
• **Click, Carol**
**Clarks Green,**
**PA 18411 (US)**
• **Seneschal, Karine**
**55131 Mainz (DE)**
• **Engel, Axel**
**55218 Ingelheim (DE)**

(74) Vertreter: **Gahlert, Stefan et al**
**Witte, Weller & Partner,**
**Patentanwälte,**
**Postfach 105462**
**70047 Stuttgart (DE)**

(54) **Y2O3-haltiges Aluminosilicat Glas oder Glaskeramik**

(57)   Es werden ein Glas und eine Glaskeramik angegeben, die zumindest die Bestandteile $SiO_2$, $Al_2O_3$ und $Y_2O_3$ enthält und vorzugsweise mit Seltenerd-Ionen dotiert ist. Das Gewichtsverhältnis zwischen dem Gewicht an $Y_2O_3$ und dem Gesamtgewicht von $SiO_2$, $Al_2O_3$ und $Y_2O_3$ beträgt mindestens 0,2, vorzugsweise mindestens 0,4 oder mehr. Die Seltenerd-Ionen können bevorzugt in Kristallphasen eingelagert werden, die aus dem hoch-Yttriumhaltigen Glas ausgeschieden werden.

Fig. 2

**Beschreibung**

Die Erfindung betrifft ein Glas bzw. eine Glaskeramik und eine vorteilhafte Verwendung hiervon.

Lichtquellen werden allgemein in Entladungslampen und Festkörperlampen unterteilt. Bei den Festkörperlampen dominieren Wärmestrahler für Allgemeinbeleuchtung sowie automobile Anwendungen, d.h. Anwendungen, die hohe absolute Helligkeiten erfordern, z.B. Halogenlampen. Daneben sind Festkörper-Lichtquellen in Form von Lumineszenzstrahlern bekannt, wie z.B. anorganische LEDs.

LEDs sind im Allgemeinen sehr vorteilhaft, da sie einige Eigenschaften verknüpfen, wozu u.a. gehören: ein hoher Wirkungsgrad durch direkte Umwandlung von elektrischer Energie in Lichtenergie, große Kompaktheit (Punktstrahler, womit vielfältige Designmöglichkeiten für Beleuchtungssysteme bestehen), unterschiedliche Farben (über Farbmischkonzepte sind dynamische Lichtanpassung und anwenderorientierte Beleuchtung möglich).

Bis vor einigen Jahren wurden LEDs jedoch nur als "low emitting"-Anwendungen herangezogen, insbesondere für Anzeigen. In jüngster Zeit wurde jedoch das große Potenzial von LEDs für Anwendungen mit höherem Lichtbedarf erkannt und verstärkte Anstrengungen unternommen, um bei LEDs eine verbesserte Energieeinkopplung und ein verbessertes Wärmemanagement zu erreichen. Eine stärkere Nutzung von LEDs für die Zwecke einer Allgemeinbeleuchtung bzw. für den Einsatz in automobilen Anwendungen erfordern jedoch eine weitere Anpassung von Design und eingesetzten Materialien im Hinblick auf:

- eine weitere Erhöhung der Effizienz (bis in den Bereich von Fluoreszenzlampen, also ca. 100 lm/W),
- eine größere absolute Einkopplung von Energie zur Generierung von noch größeren Helligkeiten (50 bis 2000 lm),
- eine Verbesserung der Lichtauskopplung,
- eine Verbesserung der Konversion von Hochleistungs-LEDs, die im blauen oder im UV-Bereuch abstrahlem, zur Erzeugungeines möglichst idealen weißen Farbeindrucks,
- eine verbesserte Temperatur- bzw. UV-Langzeitstabilität der in einer LED verwendeten Materialien.

LEDs erzeugen Licht in einem sehr engen Spektralbereich, während für Beleuchtungszwecke meist weißes Licht benötigt wird. Kommerziell erhältliche weiße LEDs verwenden einen III-V-Halbleiter-Emitter für die Anregung eines lumineszierenden Materials, das eine Sekundärwellenlänge in einem niedrigeren Wellenlängenbereich emittiert (Downkonversion). Eine bekannte Möglichkeit verwendet eine blaue InGaN/GaN LED, um einen breitbandigen, gelben Leuchtstoff, YAG: Ce, anzuregen. Bei diesem mittels Leuchtstoff konvertierten LEDs gelangt ein bestimmter Anteil der blauen Emission durch die Leuchtstoffschicht, die den LED-Chip bedeckt, so dass das sich ergebende Gesamtspektrum eine Farbe aufweist, die weißem Licht sehr nahe kommt. Wegen des Fehlens von Spektralanteilen im Blau/Grün-Bereich und dem roten Wellenlängenbereich ist die Farbe hierbei jedoch in den meisten Fällen nicht zufriedenstellend.

Ein weiterer Ansatz besteht in der Verwendung eines im UV- oder nahen UV-Bereich emittierenden Halbleiteremitters, der mit einem vollfarbigen Leuchtstoffsystem gekoppelt wird. Hiermit lassen sich farbmäßig zufriedenstellende Weißlichtquellen realisieren (vgl. Phys. Stat. Sol. (a) 192, Nr. 2, 237-245 (2002), M.R. Krames et al.: "High-Power III-Nitride Emitters for Solid-State Lighting").

Hierbei werden die Leuchtstoffpartikel in Epoxidharz eingebettet und als Lumineszenzschicht auf den Halbleiteremitter aufgebracht.

Bei den vorgenannten Leuchtstoff-Schichten, die zur Umsetzung des von den LEDs emittierten Lichtes in einem gewünschten Spektralbereich insbesondere zur Erzeugung von weißem Licht dienen, ergeben sich gewisse Nachteile durch die Einbettung der verwendeten Leuchtstoffe in Epoxidharz. Durch die verwendeten Granulate entstehen Streuverluste. Eine nicht homogene Verteilung des Granulats auf dem Halbleiteremitter kann winkelabhängig zu unterschiedlichen Farbeindrücken führen. Darüber hinaus sind Epoxidharze in vielerlei Hinsicht nicht langzeitstabil, insbesondere bezüglich ihrer optischen und mechanischen Eigenschaften. Auch die thermische Stabilität ist für die Erzeugung von hohen Helligkeiten in der Regel unzureichend. Außerdem ist die Herstellung derartiger Konversionsschichten aufwändig und teuer.

Des Weiteren ist es aus der JP 2001 214162 bekannt, zur Erzeugung von weißem Licht mittels einer im blauen Bereich emittierenden LED einen Leuchtstoff zu verwenden, der eine Oxynitrid-Glasmatrix mit 20 bis 50 Mol-% CaO, 0 bis 30 Mol-% $Al_2O_3$, 25 bis 60 Mol-% $SiO_2$, 5 bis 50 Mol-% AlN und 0,1 bis 20 Mol-% eines Seltenerdoxids und eines Übergangsmetalloxids aufweist.

Aus der DE 101 37 641 Al ist eine Hybrid-LED bekannt, welche das von einer LED emittierte Lichtspektrum im überwiegenden UV-Bereich durch einen lumineszierenden Glaskörper in ein langwelligeres Lichtspektrum umsetzt.

Allerdings sind in dieser Veröffentlichung keinerlei Angaben über den Aufbau des lumineszierenden Glaskörpers gemacht.

Es sind zwar grundsätzlich lumineszierende Gläser bekannt, die mit seltenen Erden dotiert sind und die insbesondere in der Augenheilkunde, als Filter, bei Laseranwendungen, zur Aufwärtskonversion und für Lumineszenzanwendungen verwendet werden.

Jedoch offenbart der Stand der Technik keinerlei lumineszierenden Gläser, die zur Erzeugung von weißem Licht mit ausreichend hoher Qualität und Intensität geeignet sind, um z.B. für Innenbeleuchtungszwecke angewendet werden zu können.

So offenbart z.B. die JP 2000 281 382 A silikatische Gläser und Glaskeramiken, die Seltenerd-Kationen enthalten, um die Lumineszenz zu erzeugen. Dabei sind 30 bis 70 Mol-% $SiO_2$, bis zu 10 Mol-% $GeO_2$, 5 bis 40 Mol-% MgO und 10 bis 55 Mol-% MO enthalten, wobei M aus Ca, Sr und Ba ausgewählt ist.

Die EP 0 847 964 A1 offenbart ein oxidisches fluoreszierendes Glas, das 2 bis 60 Mol-% $SiO_2$, 5 bis 70 Mol-% $B_2O_3$ und 5 bis 30 Mol-% RO enthält, wobei R aus Mg, Ca, Sr und Ba ausgewählt ist. Zur Lumineszenz sind 2 bis 15 Mol-% $Tb_2O_3$ oder $Eu_2O_3$ zugesetzt.

Aus der US 4 530 909 ist ein Aluminosilikatglas bekannt, das 30 bis 60 Mol-% $SiO_2$, 20 bis 35 Mol-% $Al_2O_3$ und 10 bis 30 Mol-% eines Yttrium-Konzentrats enthält, das überwiegend aus $Y_2O_3$ besteht und Seltenerdoxide sowie $ZrO_2$ enthält.

Die Herstellung dieses Glases ist äußerst kompliziert. Auch weist das Glas nicht die geforderten Lumineszenzeigenschaften auf.

Vor diesem Hintergrund liegt der Erfindung zugrunde, ein Glas oder eine Glaskeramik anzugeben, das grundsätzlich für eine hohe Dotierung mit Seltenerdionen geeignet ist. Um möglichst vorteilhafte Lumineszenzeigenschaften bei der Konversion von Licht aus Kaltlichtquellen (LEDs oder Entladungslampen) erreichen zu können. Darüber hinaus sollen möglichst weitere vorteilhafte Anwendungen für das Glas bzw. die Glaskeramik bestehen.

Diese Aufgabe wird erfindungsgemäß durch ein Glas oder eine Glaskeramik mit mindestens den Bestandteilen $SiO_2$, $Al_2O_3$ und $Y_2O_3$ gelöst, wobei das Gewichtsverhältnis zwischen dem Gewicht an $Y_2O_3$ und dem Gesamtgewicht von $SiO_2$, $Al_2O_3$ und $Y_2O_3$ mindestens 0,2, vorzugsweise mindestens 0,3, besonders bevorzugt mindestens 0,4 beträgt.

Die Aufgabe der Erfindung wird auf diese Weise vollkommen gelöst.

Erfindungsgemäß wird nun ein Glas bzw. eine Glaskeramik angegeben, die einen sehr hohen Gehalt an $Y_2O_3$ aufweist. Damit ist es einerseits möglich, wirkungsvolle Dotierungen mit Seltenerd-Ionen zur Erzeugung von besonders vorteilhaften Lumineszenzeigenschaften zu erreichen. Zum anderen werden auch vorteilhafte Anwendungen ohne Dotierung mit Seltenerdionen ermöglicht, beispielsweise als alkalifreie Substrate für TFT-Display-Anwendungen, als hochtemperaturfeste Rohre für Lampenkolben, als hochsteife Trägermaterialien für Hard-Disk-Anwendungen oder als Targetmaterial zur Beschichtung von oxidischen, metallischen Substraten. Auch ergibt sich auf diese Weise ein sehr hochschmelzendes Glas mit hohem Brechungsindex, das sehr temperaturbeständig ist und für optische Zwecke einsetzbar ist.

Eine weitere Möglichkeit besteht in der Verwendung des erfindungsgemäßen Materials als Konversionsmedium für Strahlung allgemein in eine Strahlung mit einem anderen Energiegehalt bzw. mit einer anderen Spektralverteilung. So kann das erfindungsgemäße Material etwa als Konversionsmedium zur Konversion von Röntgenstrahlung oder beispielsweise Neutronenstrahlung in beispielsweise sichtbares Licht verwendet werden. In diesem Zusammenhang sind insbesondere Scintillationsanwendungen interessant. Auch ist es denkbar, das erfindungsgemäße Material in Zusammenhang mit einem Laser zu verwenden, wobei durch die Streuung des Materials in Verbindung mit der Lumineszenz abweichend von der üblichen Lasercharakteristik ein aufgeweiteter Lichtstrahl über einen größeren Wellenlängenbereich emittiert wird.

In vorteilhafter Weiterbildung der Erfindung ist das Glas oder die Glaskeramik mit einer Dotierung mindestens eines Seltenerd-Ions versehen. Auf diese Weise können die vorteilhaften Eigenschaften des hohen Yttrium-Gehaltes genutzt werden, um Seltenerd-Ionen in die Glasmatrix oder in kristalline Phasen einzubauen. Dies ist möglich, da Yttrium-Ionen und Seltenerd-Ionen chemisch sehr ähnlich sind. Die Position des Yttriums kann sowohl im Glasnetzwerk als auch in Kristallphasen partiell durch seltene Erden ersetzt werden. Auf diese Weise können besonders vorteilhafte Lumineszenzeigenschaften erzeugt werden.

Gemäß einer weiteren Ausgestaltung der Erfindung beträgt das Gewichtsverhältnis zwischen dem Gewicht an $SiO_2$ und dem Gesamtgewicht von $SiO_2$, $Al_2O_3$ und $Y_2O_3$ höchstens 0,5.

Ferner beträgt das Gewichtsverhältnis zwischen dem Gewicht an $Al_2O_3$ und dem Gesamtgewicht von $SiO_2$, $Al_2O_3$ und $Y_2O_3$ vorzugsweise höchstens 0,6, insbesondere höchstens 0,55.

Bei Berücksichtigung dieser Grenzwerte lassen sich die Eigenschaften des Dreiphasensystems $SiO_2$-$Al_2O_3$-$Y_2O_3$ vorteilhaft nutzen, um Wirtsphasen für die Aufnahme von Seltenerd-Ionen zu erzeugen.

Unabhängig von der Natur des Grundglases wird durch die Erfindung ferner vorgeschlagen, eine Glaskeramik zu schaffen, die kristalline Phasen enthält, in denen zumindest teilweise Seltenerd-Ionen aufgenommen sind.

Hierbei kann es sich insbesondere um zumindest eine der Phasen $Y_3Al_5O_{12}$, $Y_2SiO_5$, $Y_2Si_2O_7$ und, sofern Erdalkalien und andere Oxide in entsprechenden Konzentrationen enthalten sind, $SrAl_2O_4$, $BaMgAl_{10}O_{17}$, $Sr_2P_2O_7$, $Sr_4Al_{14}O_{25}$ oder $YBO_3$ handeln, die zumindest teilweise als Wirtsphase zur Aufnahme von Seltenerd-Ionen dienen.

Die Dotierung des Glases bzw. der Glaskeramik mit Seltenerd-Ionen beträgt in vorteilhafter Weiterbildung der Erfindung mindestens 0,1 Gew.-% (auf Oxidbasis), vorzugsweise mindestens 1 Gew.-%, besonders bevorzugt mindestens 2 Gew.-%.

Auf diese Weise lassen sich höhere Wirkungsgrade bei Lumineszenzanwendungen erreichen. Die zur Dotierung verwendeten Seltenerd-Ionen können beispielsweise Ce, Pr, Nd, Sm, Eu, Gd, Tb, Er, Tm, Yb, Dy oder La umfassen. Dabei können einzelne dieser seltenen Erden oder Mischungen davon ausgewählt sein.

Das Glas bzw. die Glaskeramik kann weitere Zusätze enthalten, beispielsweise $B_2O_3$, $P_2O_5$, SrO, BaO, CaO, MgO, $Ga_2O_3$, $Na_2O$, $K_2O$, $Li_2O$, $TiO_2$, $ZrO_2$, $Ta_2O_5$.

Hierbei ist der Gehalt an $ZrO_2$ allerdings vorzugsweise auf weniger als 5 Gew.-% begrenzt, vorzugsweise auf höchstens 4 Gew.-%, weiter bevorzugt auf höchstens 3 Gew.-%, weiter bevorzugt auf höchstens 1 Gew.-%, besonders bevorzugt auf höchstens 0,1 Gew.-%. Oder das Glas bzw. die Glaskeramik ist frei von $ZrO_2$, außer zufälligen Verunreinigungen.

Eine erste Gruppe erfindungsgemäßer Gläser bzw. Glaskeramiken enthält zumindest folgende Bestandteile (in Gew.-% auf Oxidbasis):

| | |
|---|---|
| $SiO_2$ | 5 - 50 |
| $Al_2O_3$ | 5 - 50 |
| $Y_2O_3$ | 10 - 80 |
| $B_2O_3$ | 0 - 20 |
| Seltene Erden | 0,1 - 30. |

In bevorzugter Weiterbildung dieser Ausführung sind hierbei folgende Bestandteile enthalten (in Gew.-% auf Oxidbasis):

| | |
|---|---|
| $SiO_2$ | 10 - 40 |
| $Al_2O_3$ | 10 - 40 |
| $Y_2O_3$ | 20 - 70 |
| $B_2O_3$ | 1 - 15 |
| Seltene Erden | 0,5 - 15. |

In weiter bevorzugter Ausführung sind hierbei folgende Bestandteile (in Gew.-% auf Oxidbasis) enthalten:

| | |
|---|---|
| $SiO_2$ | 15 - 35 |
| $Al_2O_3$ | 15 - 35 |
| $Y_2O_3$ | 25 - 60 |
| $B_2O_3$ | 1 - 60 |
| Seltene Erden | 1 - 15. |

Bei der erfindungsgemäßen Glaskeramik kann das Verhältnis zwischen den Kristallphasen und dem Restglas-Anteil vorteilhaft so eingestellt werden, dass bei Konversion von LED-Licht des blauen oder des UV-Spektralbereiches ein annähernd weißer Farbeindruck entsteht. Die Restglasphase enthält hierbei nennenswerte Anteile an Seltenerd-Ionen und bildet einen verbreiteten Untergrund um die Emissionswellenlängen bzw. dazwischen. Durch eine entsprechende Einstellung des Verhältnisses lässt sich somit ein verbesserter weißer Farbeindruck erzielen. Insgesamt lässt sich mit dem erfindungsgemäßen Glas bzw. der Glaskeramik eine Farbtemperatur erzielen, die bevorzugt bei Werten > 3600 K liegt, wobei der Farbwiedergabeindex CRI von > 85, bevorzugt von > 90, besonders bevorzugt von > 95 erzielbar ist.

Die Größe der Kristallite kann durch die Temperaturbehandlung zur Überführung des Ausgangsglases in eine Glaskeramik gezielt gesteuert werden. Die Größe der Kristallite liegt hierbei in einem Bereich zwischen 20 nm und 2000 nm. Vorzugsweise wird die Größe der Kristallite gezielt eingestellt, so dass das emittierte Licht in keine bzw. eine vernachlässigbare Streuungswechselwirkung mit den Kristalliten tritt. Hierzu wird die Kristallitgröße vorzugsweise zwischen 50 und 1000 nm, besonders bevorzugt zwischen 50 und 500 nm eingestellt.

Über die Temperaturführung während der Keramisierung kann die Einstellung der Kristallitgrößenverteilung und des mittleren Abstandes der Kristallite untereinander gesteuert werden. Als Richtwert für eine enge Kristallitgrößenverteilung sollte das Verhältnis der Differenz aus 99. und 50. Perzentile zur 99. Perzentile der Kristallitgröße [($d_{99}$-$d_{50}$/$d_{99}$] bevorzugt ≤ 10% sein.

Eine enge Kristallitgrößenverteilung und ein in hohem Maße einheitlicher Kristallitabstand bewirkt eine überwiegend kohärente Streuung derjenigen Lichtwellenlängen, die kleiner sind als die Kristallitgröße. Dem Ziel, diese kohärente Streuung zur Steigerung der Quantenausbeute der Fluoreszenzanregung auszunutzen, wird entsprochen, wenn die Kristallitgröße kleiner oder gleich der Lichtwellenlänge des anregenden UV-Lichtes eingestellt wird.

Es sei erwähnt, dass unter einer Glaskeramik im Sinne dieser Anmeldung eine aus einem (im Allgemeinen noch nicht kristallisierten) Ausgangsglas durch eine gezielte Wärmebehandlung oberhalb von $T_g$ gesteuert kristallisierte Glaskeramik zu verstehen ist. Dabei werden im Glas Kristalle ausgeschieden, deren Größe und Zusammensetzung durch die verwendeten Temperaturen, Heizrampen und Haltezeiten bestimmt und kontrolliert werden. Nicht als Glaskeramik im Sinne dieser Anmeldung werden Keramiken angesehen, die durch spontane Kristallisation von Gläsern entstehen, wie es bei der Entwicklung von Glaskeramiken gerade vermieden werden soll. Bei Glaskeramiken wird angestrebt, den glasigen Zustand zumindest bis zur Transformationstemperatur $T_g$ zu erhalten und oberhalb von $T_g$ eine gezielte, kontrollierte und meist partielle Kristallisation durchzuführen.

Zur Kombination mit LEDs wird der thermische Ausdehnungskoeffizient in bevorzugter Weiterbildung der Erfindung zwischen $3 \cdot 10^{-6}$ K$^{-1}$ und $7,5 \cdot 10^{-6}$ K$^{-1}$, bevorzugt zwischen $4,5 \cdot 10^{-6}$ K$^{-1}$ und $7,5 \cdot 10^{-6}$ K$^{-1}$ eingestellt. Auf diese Weise lässt sich das erfindungsgemäße Glas bzw. die Glaskeramik in direktem Kontakt mit dem LED-Körper bringen. Auch eine direkte Abscheidung des Glases bzw. der Glaskeramik auf dem LED-Halbleiter z.B. mittels PVD (Plasma Vapor Deposition) ist wegen der Anpassung des thermischen Ausdehnungskoeffizienten an Si oder III-V-Halbleiter aus der Familie von InGaP bzw. InGaN möglich.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile ergeben sich aus der nachfolgenden Beschreibung eines Ausführungsbeispiels unter Bezugnahme auf die Zeichnung. Es zeigen:

Fig. 1    eine Differential-Thermoanalyse eines erfindungsgemäßen Glases;

Fig. 2    ein rasterelektronenmikroskopisches Bild einer Probe der Glaskeramik des Ausführungsbeispiels gemäß Fig. 1 nach einer thermischen Behandlung zur Kristallisation;

Fig. 3    das Ergebnis einer Mikrosondenanalyse des Kristalls aus Fig. 2 und

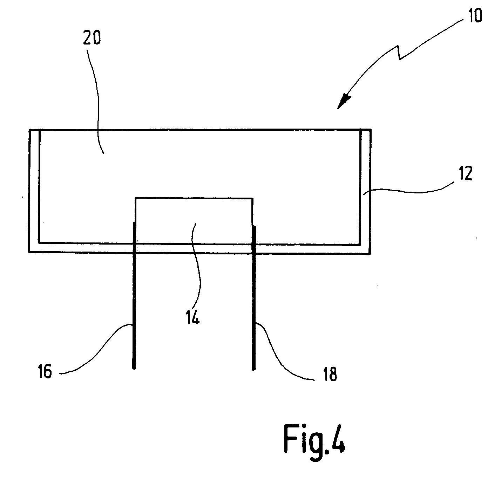

Fig. 4    eine LED-Lichtquelle mit einem erfindungsgemäßen Lichtkonversionsmedium.

Beispiele

Es wurde ein Glas (vgl. Tab. 1, Beispiel Nr. 1) mit folgenden Bestandteilen (in Gew.-% auf Oxidbasis) erschmolzen:

| | |
|---|---|
| $SiO_2$ | 23,64 |
| $B_2O_3$ | 6,36 |
| $Al_2O_3$ | 20, 91 |
| $Y_2O_3$ | 46,36 |
| $Eu_2O_3$ | 2,73. |

Das Glas wurde in einem Platin-Tiegel bei einer Temperatur von etwa 1550 bis 1600°C erschmolzen und homogenisiert.

Nach Abkühlung auf Raumtemperatur wurde ein klares, durchsichtiges Glas erhalten.

Das erfindungsgemäße Material leuchtet hellorange sowohl im glasigen als auch im keramisierten Zustand, sofern es mit UV-Licht ($\lambda$ = 250 bis 400 nm) angeregt wird.

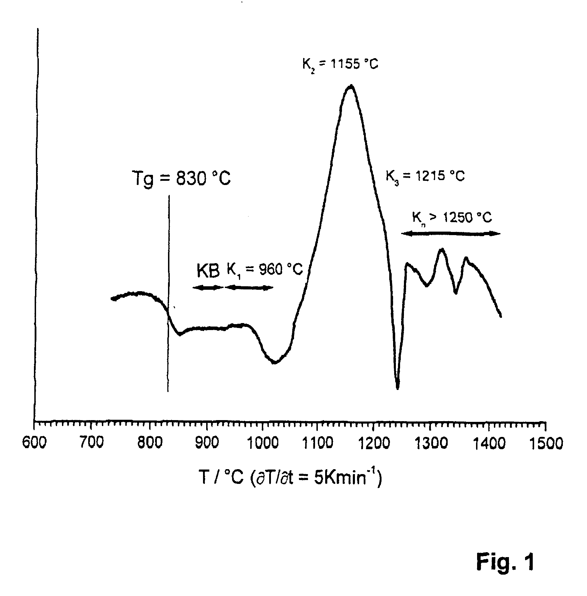

Fig. 1 zeigt das Ergebnis einer Differential-Thermoanalyse (DATA).

Die Glastransformationstemperatur $T_g$ liegt mit 830°C sehr hoch.

Bei weiterem Aufheizen ergaben sich Kristallisationstemperaturen verschiedener Kristallphasen. Im mit "KB" bezeichneten Bereich ergaben sich Boratphasen ($YBO_3$). Im mit K1 bezeichneten Bereich ergab sich die Bildung von $Y_2Si_2O_7$. K2/K3 zeigt die Umwandlung/Umkristallisation von $Y_2Si_2O_7$-Phasen in verschiedene Isotype (Isotype: gleiche Zusammensetzung, andere Kristallsymmetrie) und $Y_2SiO_5$, an. Im Bereich zwischen K3 und KN erfolgte möglicherweise das Schmelzen der Boratphasen. Der Bereich KN betrifft nicht weiter untersuchte Kristallisationen, vermutlich die Bildung von Yttrium-Silikaten.

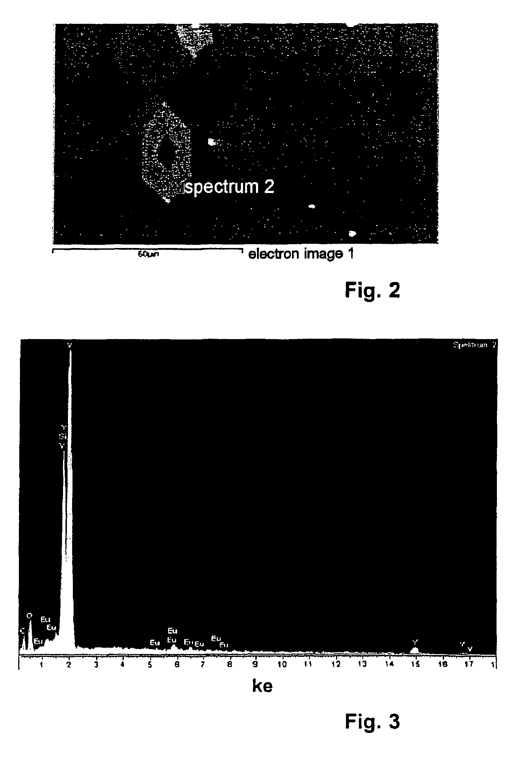

Fig. 2 zeigt ein SEM-Bild einer Probe der Glaskeramik des Ausführungsbeispiels gemäß Fig. 1 nach thermischer Behandlung (drei Stunden bei 850°C und eine Stunde bei 1050°C). Im Anschliff ist ein sechseckiger $Y_2Si_2O_7$-Kristall mit partieller Y-Eu-Substitution erkennbar, sowie als helle Punkte Borat-Kristalle ($YBO_3$). Die Restglasphase erscheint auf dem Bild dunkelgrau. Die gleichfalls nachgewiesene $Y_2SiO_5$-Phase ist hier nicht zu erkennen.

Mit der Mikrosondenanalyse gemäß Fig. 3 wurde nachgewiesen, dass in dem untersuchten hexagonalen Kristall (Spektrum 2) neben Yttrium auch Europium enthalten ist, dass also eine partielle Y-Eu-Substitution stattgefunden hat.

Das obige Beispiel zeigt das hohe Potenzial der Verwendung von hoch Yttrium-haltigen Gläsern, aus denen sich Kristallphasen ausscheiden lassen, die als Wirtsphasen zur Aufnahme von Seltenerd-Ionen dienen.

Weitere Beispiele sind in Tabelle 1 zusammengefasst (vgl. Beispiele Nr. 2 - 7).

Die erfindungsgemäßen hoch Yttrium-haltigen Gläser bzw. Glaskeramiken sind zur Konversion von Licht einer LED, die im blauen oder im UV-Bereich emittiert, in weißes Licht mit einem Farbwiedergabeindex CRI geeignet, der größer als 90 oder sogar größer als 95 ist. Der CRI ist ein quantitativer Wert der Farbwiedergabefähigkeit einer Lichtquelle, der als der numerische Durchschnitt von acht einzelnen Zellenfarbwiedergabeindices $R_1$ bis $R_8$ berechnet wird, wie von dem CIE-Standard "Method of Measuring and Specifying Colour Rendering Properties of Light Sources", CIE 13.3-1995 gegeben:

$$CRI = (1/8) \sum R_i \ (i=1 \ bis \ 8).$$

Ein perfekter CRI-Wert ist 100, und ein annehmbarer Wert von CRI ist größer als 80.

Eine mögliche Anwendung des Glases bzw. der Glaskeramik als Lichtkonvesionsmaterial bei einer Lichtquelle ist schematisch in Fig. 3 dargestellt.

In Fig. 3 ist eine Lichtquelle insgesamt mit der Ziffer 10 bezeichnet. Die Lichtquelle 10 weist ein Gehäuse 12 auf, in dem eine LED 14 aufgenommen ist, die z.B. im blauen Bereich emmitiert. Zur Energieversorgung der LED dienen Anschlussleitungen 16, 18. Der die LED umgebende Hohlraum des Gehäuses 12 ist mit einem erfindungsgemäßen Lichtkonversionsmedium 20 etwa in Form einer Glaskeramik nach Beispiel Nr. 1 ausgefüllt. Das von der LED emittierte blaue Licht wird durch das Lichtkonversionsmedium 20 in weißes Licht umgesetzt.

Tab. 1

| Gew.-% | 1 | 2 | 3 | 4 | 5 | 6 | 7 |
|---|---|---|---|---|---|---|---|
| Al2O3 | 20,91 | 29,27 | 24,39 | 31,07 | 35,07 | 35,07 | 28,8461 |
| SiO2 | 23,64 | 29,27 | 28,29 | 22,33 | 23,7 | 23,7 | 28,8462 |
| Y2O3 | 46,36 | 39,02 | 44,88 | 43,69 | 36,02 | 36,02 | 38,4615 |
| CeO2 | 0 | 0 | 2,44 | 2,91 | 2,84 | 2,84 | 3,8462 |
| Eu2O3 | 2,73 | 2,44 | 0 | 0 | 0 | 0 | 0 |
| TiO2 | 0 | 0 | 0 | 0 | 0 | 2,37 | 0 |
| ZrO2 | 0 | 0 | 0 | 0 | 2,37 | 0 | 0 |
| B2O3 | 6,36 | 0 | 0 | 0 | 0 | 0 | 0 |
| Al2O3/ (Y2O3+SiO2+Al2O3) | 0,23 | 0,30 | 0,25 | 0,32 | 0,37 | 0,37 | 0,30 |
| SiO2/ (Y2O3+SiO2+Al2O3) | 0,26 | 0,30 | 0,29 | 0,23 | 0,25 | 0,25 | 0,30 |
| Y2O3/ (Y2O3+SiO2+Al2O3) | 0,51 | 0,40 | 0,46 | 0,45 | 0,38 | 0,38 | 0,40 |
| Keramisierung | 850 °C/ 3h + 1050°C/1h | 900 °C/ 2h + 1150°C/1h | 900 °C/2h + 1150°C/1h | 900 °C/2h + 1150°C/1h | 900°C/2h + 1150°C/1h | 900 °C/2h + 1125°C/1h | 900 °C/2h + 1150°C/1h |
| Kristallphasen | Y2Si2O7, Y2Si2O5, YBO3 | | | | | | |
| Lumineszenz unter UV-Licht (250-400 nm) | glasig: orange keramisiert: hellorange | glasig: orange keramisiert: hellorange | glasig: blau keramisiert: hellblau | glasig: blau keramisiert: hellblau | glasig: blau keramisiert: hellblau | glasig: blau keramisiert: hellblau | glasig: blau keramisiert: hellblau |

**Patentansprüche**

**1.** Glas oder Glaskeramik mit mindestens den Bestandteilen $SiO_2$, $Al_2O_3$ und $Y_2O_3$, wobei das Gewichtsverhältnis zwischen dem Gewicht an $Y_2O_3$ und dem Gesamtgewicht von $SiO_2$, $Al_2O_3$ und $Y_2O_3$ mindestens 0,2 vorzugsweise mindestens 0,3, besonders bevorzugt mindestens 0,4 beträgt.

**2.** Glas oder Glaskeramik nach Anspruch 1, mit einer Dotierung mindestens eines Seltenerd-Ions.

**3.** Glas oder Glaskeramik nach Anspruch 1 oder 2, wobei das Gewichtsverhältnis zwischen dem Gewicht an $SiO_2$ und dem Gesamtgewicht von $SiO_2$, $Al_2O_3$ und $Y_2O_3$ höchstens 0,5 beträgt.

**4.** Glas oder Glaskeramik nach Anspruch 1, 2 oder 3, wobei das Gewichtsverhältnis zwischen dem Gewicht an $Al_2O_3$ und dem Gesamtgewicht von $SiO_2$, $Al_2O_3$ und $Y_2O_3$ höchstens 0,6, vorzugsweise höchstens 0,55 beträgt.

**5.** Glas oder Glaskeramik nach einem der vorhergehenden Ansprüche, mit einer Dotierung von Seltenerd-Ionen von mindestens 0,1 Gew.-% (auf Oxidbasis), vorzugsweise mindestens 1 Gew.-%, besonders bevorzugt mindestens 2 Gew.-%.

**6.** Glas oder Glaskeramik nach einem der Ansprüche 2 bis 5, mit einer Dotierung mindestens eines Seltenerd-Ions, das aus der Gruppe ausgewählt ist, die gebildet ist durch Ce, Pr, Nd, Sm, Eu, Gd, Tb, Er, Tm, Yb, Dy und La .

**7.** Glas oder Glaskeramik nach einem der vorhergehenden Ansprüche, mit Zusätzen von $B_2O_3$.

**8.** Glas oder Glaskeramik nach einem der vorhergehenden Ansprüche, worin folgende Bestandteile (im Gew.-% auf Oxidbasis) enthalten sind:

$SiO_2$ 5 - 50
$Al_2O_3$ 5 - 50
$Y_2O_3$ 10 - 80
$B_2O_3$ 0 - 20
seltene Erden 0,1 - 30.

**9.** Glas oder Glaskeramik nach einem der vorhergehenden Ansprüche, worin folgende Bestandteile (im Gew.-% auf Oxidbasis) enthalten sind:

$SiO_2$ 10 - 40
$Al_2O_3$ 10 - 40
$Y_2O_3$ 2 0 - 70
$B_2O_3$ 1 - 15
seltene Erden 0,5 - 15.

**10.** Glas oder Glaskeramik nach einem der vorhergehenden Ansprüche, worin folgende Bestandteile (im Gew.-% auf Oxidbasis) enthalten sind:

$SiO_2$ 15 - 35
$Al_2O_3$ 15 - 35
$Y_2O_3$ 25 - 60
$B_2O_3$ 1 - 10
seltene Erden 1 - 15.

**11.** Glas oder Glaskeramik nach einem der vorhergehenden Ansprüche, worin ferner Zusätze mindestens einer Komponente enthalten ist, die ausgewählt ist aus der Gruppe, die gebildet ist durch SrO, BaO, CaO, MgO, $P_2O_5$, $Ga_2O_3$, $Na_2O$, $K_2O$, $Li_2O$, $TiO_2$, $ZrO_2$ und $Ta_2O_5$.

**12.** Glas oder Glaskeramik nach einem der vorhergehenden Ansprüche, mit einem Gehalt an $ZrO_2$ von weniger als 5 Gew.-%, vorzugsweise von höchstens 4 Gew.-%, weiter bevorzugt von höchstens 3 Gew.-%, weiter bevorzugt von höchstens 1 Gew.-%, besonders bevorzugt von höchstens 0,1 Gew.-%.

**13.** Glaskeramik, insbesondere nach einem der vorhergehenden Ansprüche, die kristalline Phasen enthält, in denen zumindest teilweise Seltenerd-Ionen aufgenommen sind.

**14.** Glaskeramik nach Anspruch 13, die kristalline Phasen mit Yttrium-Ionen als Bestandteil enthält, die zumindest teilweise durch Seltenerd-Ionen ersetzt sind.

**15.** Glaskeramik nach Anspruch 13 oder 14, die als kristalline Phasen zumindest eine der Phasen $Y_3Al_5O_{12}$, $Y_2SiO_5$, $Y_2Si_2O_7$, $SrAl_2O_4$, $BaMgAl_{10}O_{17}$, $Sr_2P_2O_7$, $Sr_4Al_{14}O_{25}$ und $YBO_3$ enthält, die zumindest teilweise als Wirtsphase zur Aufnahme von Seltenerd-Ionen dient.

**16.** Glaskeramik nach einem der Ansprüche 13 bis 15, bei der in im Restglas Seltenerd-Ionen aufgenommen sind.

**17.** Glaskeramik nach Anspruch 16, bei dem das Verhältnis zwischen den Kristallphasen und dem Restglas-Anteil so eingestellt ist, dass bei Konversion von LED-Licht des blauen oder des W-Spektralbereichs ein annähernd weißer Farbeindruck entsteht.

**18.** Glaskeramik nach einem der Ansprüche 13 bis 17, bei der die Größe der Kristallite in einem Bereich zwischen 20 nm und 2000 nm, vorzugsweise zwischen 50 und 1000 nm, besonders bevorzugt zwischen 50 und 500 nm.

**19.** Glaskeramik nach einem der Ansprüche 13 bis 18, bei der das Verhältnis der Differenz aus 99. und 50. Perzentile zur 99. Perzentile der Kristallitgröße kleiner oder gleich 10 Prozent ist: $[(d_{99}-d_{50}/d_{99}] \leq 10\%$.

**20.** Glas oder Glaskeramik nach einem der vorhergehenden Ansprüche, wobei der thermische Ausdehnungskoeffizient zwischen $3 \cdot 10^{-6}K^{-1}$ und $7,5 \cdot 10^{-6}K^{-1}$, bevorzugt zwischen $4,5 \cdot 10^{-6}K^{-1}$ und $7,5 \cdot 10^{-6}K^{-1}$, eingestellt ist.

**21.** Verwendung eines Glases oder einer Glaskeramik nach einem der vorhergehenden Ansprüche als optisches Glas mit hohem Brechungsindex als optisches Glas mit hoher Temperaturbeständigkeit, als Material zur Konversion von Strahlung einer ersten Strahlung in eine Strahlung mit anderem Energiegehalt oder einer anderen Spektralverteilung, vorzugsweise zur Downkonversion von Anregungsstrahlung im blauen und UV-Spektralbereich, als alkalifreies Substrat für TFT-Display-Anwendungen, als hochtemperaturfestes Rohr für Lampenkolben, als hochsteifes Trägermaterial für Hard-Disk-Anwendungen, als Targetmaterial zur Beschichtung von oxidischen, metallischen oder halbleitenden Substraten.

**22.** Lichtquelle mit einer LED und einem lumineszierenden Glas oder einer lumineszierenden Glaskeramik nach einem der Ansprüche 1 bis 20, die bei Emission der LED im blauen oder im UV-Bereich annähernd weißes Licht emittiert.

**23.** Lichtquelle nach Anspruch 22, deren Farbwiedergabeindex CRI >85, bevorzugt >90, besonders bevorzugt >95 ist.

Fig. 1

spectrum 2

electron image 1

**Fig. 2**

ke

**Fig. 3**

Fig.4

**Europäisches Patentamt**

# EUROPÄISCHER RECHERCHENBERICHT

Nummer der Anmeldung

EP 05 01 9624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN<br>Bd. 016, Nr. 369 (C-0972),<br>10. August 1992 (1992-08-10)<br>-& JP 04 119941 A (MITSUBISHI HEAVY IND LTD), 21. April 1992 (1992-04-21)<br>* Zusammenfassung; Beispiele * | 1-16, 18-23 | C03C3/062<br>C03C3/068<br>C03C3/095<br>C03C4/12<br>C03C10/00 |
| X | US 4 088 023 A (BERLEUE ET AL)<br>9. Mai 1978 (1978-05-09)<br>* Beispiele 1,2,7,10 * | 1-6,8-12 | |
| X | WO 2004/031089 A (SCHOTT GLAS; CARL-ZEISS-STIFTUNG TRADING AS SCHOTT GLAS; CARL-ZEISS-ST)<br>15. April 2004 (2004-04-15)<br>* Beispiele 4,5,7,8 * | 1,3,4,7, 11 | |
| P,X | US 2004/233514 A1 (TAKAGI MASAHIRO ET AL)<br>25. November 2004 (2004-11-25)<br>* Absätze [0030] - [0034], [0037]; Beispiele a,b * | 1-9,11, 21 | |
| X | US 6 482 758 B1 (WEBER J. K. RICHARD ET AL) 19. November 2002 (2002-11-19)<br>* Spalte 1, Zeilen 39-44; Beispiele IV-C; Tabellen 1,6 *<br>* Spalte 3, Zeilen 10-59 * | 1-12 | **RECHERCHIERTE SACHGEBIETE (IPC)**<br><br>C03C |
| X | US 3 843 551 A (MULLER G,DT ET AL)<br>22. Oktober 1974 (1974-10-22)<br>* Spalte 1, Zeilen 71,72; Anspruch 1 * | 13,16 | |
| X | US 5 537 505 A (BORRELLI ET AL)<br>16. Juli 1996 (1996-07-16)<br>* Spalte 4, Zeilen 41-43; Ansprüche 1,2 * | 13,14 | |

-/--

Der vorliegende Recherchenbericht wurde für alle Patentansprüche erstellt

| Recherchenort | Abschlußdatum der Recherche | Prüfer |
|---|---|---|
| Den Haag | 15. Dezember 2005 | Kervinen, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**Europäisches Patentamt**

**EUROPÄISCHER RECHERCHENBERICHT**

Nummer der Anmeldung

EP 05 01 9624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 924 171 A (KABUSHIKI KAISHA OHARA) 23. Juni 1999 (1999-06-23) * Ansprüche 9,10 * ----- | 13,16,20 | |
| P,X | DE 103 11 820 A1 (SCHOTT GLAS) 30. September 2004 (2004-09-30) * Ansprüche 2-5,14 * ----- | 13,16, 17,21-23 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 15. Dezember 2005 | Kervinen, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 01 9624

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2005

| Im Recherchenbericht angeführtes Patentdokument | | Datum der Veröffentlichung | Mitglied(er) der Patentfamilie | | Datum der Veröffentlichung |
|---|---|---|---|---|---|
| JP 04119941 | A | 21-04-1992 | KEINE | | |
| US 4088023 | A | 09-05-1978 | KEINE | | |
| WO 2004031089 | A | 15-04-2004 | AU | 2003273744 A1 | 23-04-2004 |
| | | | CN | 1684918 A | 19-10-2005 |
| | | | DE | 10245234 A1 | 08-04-2004 |
| | | | EP | 1558535 A1 | 03-08-2005 |
| US 2004233514 | A1 | 25-11-2004 | JP | 2004250251 A | 09-09-2004 |
| US 6482758 | B1 | 19-11-2002 | KEINE | | |
| US 3843551 | A | 22-10-1974 | DE | 2207634 A1 | 30-08-1973 |
| | | | FR | 2172404 A2 | 28-09-1973 |
| | | | GB | 1385645 A | 26-02-1975 |
| | | | JP | 48094719 A | 06-12-1973 |
| | | | NL | 7302084 A | 21-08-1973 |
| US 5537505 | A | 16-07-1996 | AU | 688149 B2 | 05-03-1998 |
| | | | AU | 3783895 A | 30-05-1996 |
| | | | CA | 2161494 A1 | 26-05-1996 |
| | | | CN | 1133268 A | 16-10-1996 |
| | | | DE | 69504461 D1 | 08-10-1998 |
| | | | DE | 69504461 T2 | 14-01-1999 |
| | | | EP | 0716050 A1 | 12-06-1996 |
| | | | JP | 8239235 A | 17-09-1996 |
| | | | US | 5483628 A | 09-01-1996 |
| EP 0924171 | A | 23-06-1999 | DE | 69822277 D1 | 15-04-2004 |
| | | | DE | 69822277 T2 | 20-01-2005 |
| | | | JP | 11240736 A | 07-09-1999 |
| | | | US | 6197710 B1 | 06-03-2001 |
| DE 10311820 | A1 | 30-09-2004 | US | 2005253113 A1 | 17-11-2005 |
| | | | US | 2004212302 A1 | 28-10-2004 |

EPO FORM P0461

Für nähere Einzelheiten zu diesem Anhang : siehe Amtsblatt des Europäischen Patentamts, Nr.12/82